# EUROPÄISCHE PATENTANMELDUNG

(11) **EP 2 202 334 A1**
(43) Veröffentlichungstag der Anmeldung: **30.06.2010**
(21) Anmeldenummer: 08022456.1
(22) Anmeldetag: 24.12.2008
(51) Int. Cl.: C25D 15/02, C25D 5/14, C25D 5/48, B24D 3/10, B24D 7/10, B24D 18/00, B23C 5/10

(54) **Zerspannungswerkzeug**

(71) Anmelder: DIMA-Werkzeuge GmbH, 73230 Kirchheim / Teck (DE)
(72) Erfinder: Sigel, Oliver, 73230 Kirchheim / Teck (DE)
(74) Vertreter: Ruckh, Rainer Gerhard

(57) **Zusammenfassung**

Die Erfindung betrifft ein Zerspanungswerkzeug (1) welches eine um eine Drehachse drehbare Spanstufe (2) zur Durchführung von Fräsvorgängen umfasst. Diese Spanstufe (2) weist eine Mehrfachanordnung von wendelförmigen Schneidflächen (4), die durch nutenförmige Spanräume (5) getrennt sind, auf Zumindest die Schneidflächen (4) weisen Diamantkombeschichtungen oder CBN-(Cubisches-Bor-Nitrid) Beschichtigungen auf Über die Spanräume (5) erfolgt während des Fräsvorgangs eine Späneentsorgung.

## Beschreibung

Die Erfindung betrifft ein Zerspanungswerkzeug.

Zerspanungswerkzeuge der in Rede stehenden Art sind in unterschiedlichsten Applikationen im industriellen Einsatz. Generell dienen sie dabei zur Durchführung von Fräsvorgängen, mit welchen Werkstücke verschiedener Art bearbeitet werden.

Bekannte derartige Zerspanungswerkzeuge weisen typischerweise Spanstufen auf, die aus Vollhartmetall bestehen. Die jeweilige Spanstufe wird mittels einer motorischen Antriebsvorrichtung in eine Drehbewegung bezüglich der Drehachse der Spanstufe versetzt, wodurch mit der Spanstufe bei Führen über eine Werkstückoberfläche Fräsvorgänge durchgeführt werden.

Dabei kann eine derartige Spanstufe gemäß einer ersten Variante eine im Wesentlichen durchgängige, glatte Oberfläche aufweisen, wobei diese Oberfläche im Wesentlichen die Kontur einer kreiszylindrischen Mantelfläche oder eine an den spezifischen Bearbeitungsvorgang am Werkstück angepasste Außenkontur aufweist.

Generell sind auch Zerspanungswerkzeuge bekannt, deren Spanstufe mehrere durch nutenförmige Spanräume getrennte Schneidflächen, so genannte Schneiden, aufweist. Zur Durchführung von Fräsvorgängen werden dann nur die Schneiden entlang der zu bearbeitenden Werkstückoberfläche geführt.

An derartige Zerspanungswerkzeuge werden generell als Anforderungen einerseits hohe Standzeiten, das heißt eine hohe Lebensdauer, sowie andererseits eine hohe Bearbeitungsqualität der an den Werkstücken durchgeführten Fräsvorgänge gestellt.

Diese Anforderungen sind dann nicht oder nur eingeschränkt erfüllbar, wenn die Werkstücke aus sehr harten Materialien bestehen, wie zum Beispiel aus gepresstem Graphit bestehendes Elektrodenmaterial, das zur Herstellung von Elektroden bei Funkenerosionsprozessen und dergleichen benötigt wird. Gerade bei solchen Applikationen werden zudem erhöhte Anforderungen an die Bearbeitungsgenauigkeit der zu bearbeitenden Werkstücke gestellt. So müssen bei dem Herstellungsprozess der genannten Elektroden hochgenau durch Fräsvorgänge Konturen in das Elektrodenmaterial eingearbeitet werden.

Der Erfindung liegt die Aufgabe zugrunde, ein Zerspanungswerkzeug der eingangs genannten Art bereitzustellen, welches einerseits hohe Standzeiten aufweist, und mit welchem andererseits hochgenau Fräsvorgänge durchführbar sind.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Das erfindungsgemäße Zerspanungswerkzeug umfasst eine um eine Drehachse drehbare Spanstufe zur Durchführung von Fräsvorgängen. Diese Spanstufe weist eine Mehrfachanordnung von wendelförmigen Schneidflächen, die durch nutenförmige Spanräume getrennt sind, auf. Zumindest die Schneidflächen weisen Diamantkornbeschichtungen oder CBN-(Cubisches-Bor-Nitrid) Beschichtigungen auf. Über die Spanräume erfolgt während des Fräsvorgangs eine Späneentsorgung.

Mit dem erfindungsgemäßen Zerspanungswerkzeug können auch Werkstücke, die aus harten Materialien wie Graphit, Aluminium, Kupfer, Kunststoffen, insbesondere fasergebundenen Kunststoffen oder auch Werkzeugstahl bestehen, bearbeitet werden.

Wesentlich hierbei ist, dass die Schneidflächen der Spanstufe des erfindungsgemäßen Zerspanungswerkzeugs durch die Diamantkornbeschichtung oder die CBW-Beschichtung sehr harte Oberflächen aufweisen, mittels derer Fräsvorgänge an Werkstücken, die aus den genannten harten Materialien bestehen, sehr genau durchgeführt werden können.

Die Genauigkeit und Reproduzierbarkeit der durchzuführenden Fräsvorgänge wird dadurch erhöht, dass die Spanstufe keine durchgängige glatte Oberfläche als einheitliche Schneide aufweist. Vielmehr sind die einzelnen Schneidflächen der erfindungsgemäßen Spanstufe durch die Vertiefungen bildenden nutenförmigen Spanräume getrennt. Durch die wendelförmige Anordnung der Schneidflächen einerseits und damit auch der Spanräume andererseits entsteht bei der Durchführung des Fräsvorgangs durch die Drehung der Spanstufe ein Drall, der zu einer Entsorgung der beim Fräsen des Werkstücks anfallenden Späne führt, das heißt die Späne werden über die Spanräume ausgetragen und beeinträchtigen somit die mit den Schneidflächen durchgeführten Bearbeitungsprozesse des Werkstücks nicht.

Ein weiterer wesentlicher Vorteil des erfindungsgemäßen Zerspanungswerkzeugs besteht darin, dass die Schneidflächen durch die Diamantkornbeschichtungen oder CBN-Beschichtungen eine sehr hohe Härte aufweisen, wodurch die Standzeit, das heißt die Lebensdauer des Zerspanungswerkzeugs, signifikant erhöht wird.

Gemäß einer besonders vorteilhaften Verwendung kann das erfindungsgemäße Zerspanungswerkzeug zum Fräsen von Konturen in Elektrodenmaterialien aus gepresstem Graphit eingesetzt werden, um so Elektroden für Funkenerosionsprozesse herzustellen. Bei dieser Applikation müssen hochgenau definierte Konturen in das Elektrodenmaterial eingearbeitet werden. Diese Genauigkeitsanforderungen können mit dem erfindungsgemäßen Zerspanungswerkzeug erfüllt werden, wobei zudem trotz der hohen Härtegrade des Graphitmaterials hohe Standzeiten der Zerspanungswerkzeuge erhalten werden.

Gemäß einer ersten Variante der Erfindung sind die Diamantkornbeschichtungen oder CBN-Beschichtungen nur auf die Schneidflächen der Spanstufe aufgebracht, nicht jedoch auf die vertieft liegenden Oberflächen der Spanräume. Vorteilhaft bei dieser Variante ist, dass nur die Schneidflächen eine durch die Diamantkombeschichtung oder die CBN-Beschichtung bewirkte hohe Rauigkeit aufweisen, während die Oberflächen der Spanräume glatt ausgebildet sein können, was die Späneentsorgung über die Spanräume während des Fräsvorgangs fördert. Um nur die Schneidflächen mit den Diamantkornbeschichtungen oder CBN-Beschichtungen zu versehen, werden die Oberflächen der Spanräume während der Beschichtungsvorgänge in geeigneter Weise maskiert.

Gemäß einer zweiten Variante der Erfindung sind sowohl die Schneidflächen als auch die Oberflächen der Spanräume mit der Diamantkombeschichtung oder der CBN-Beschichtung versehen. Da somit die gesamte Oberfläche der Spanstufe mit der Diamantkombeschichtung oder der CBN-Beschichtung versehen wird, entfällt der relativ aufwändige Maskierungsvorgang für die Oberflächen der Spanräume. Dies führt zu einer signifikanten Reduzierung der Herstellungskosten des Zerspanungswerkzeugs. Dabei ist durch die Vertiefungen bildenden Spanräume trotz der dort vorgesehenen Diamantkornbeschichtung oder CBN-Beschichtung noch eine ausreichende Späneentsorgung während des Fräsvorgangs gewährleistet.

Die Diamantkornbeschichtung für die Spanstufe weist bevorzugt Nickelverbindungen auf, in welche Diamantpartikel eingelagert sind. Die Nickelverbindungen verleihen der Diamantkombeschichtung eine hohe Verschleißfestigkeit, wobei durch Vorgabe geeigneter Konzentrationen und Größen der Diamantpartikel die Diamantkornbeschichtung so ausgebildet werden kann, dass mit der so beschichteten Spanstufe auch sehr harte Werkstücke bearbeitet werden können. Dasselbe gilt für die alternativ einsetzbare CBN-Beschichtung.

Die Spanstufe des erfindungsgemäßen Zerspanungswerkzeugs weist einen Träger auf, der typischerweise aus Vollhartmetall besteht. Die Diamantkombeschichtung wird vorteilhaft nicht direkt auf den Träger aufgebracht. Vielmehr erfolgt zunächst eine Entfettung der Trägeroberfläche mittels eines galvanischen Prozesses. Auf die entfettete Oberfläche des Trägers wird dann die Diamantkombeschichtung oder die CBN-Beschichtung aufgebracht, wodurch ein guter und fester Halt der Diamantkombeschichtung auf dem Träger erzielt wird.

In einer besonders vorteilhaften Ausgestaltung der Erfindung ist auf die Diamantkombeschichtung oder die CBN-Beschichtung eine Goldschicht aufgebracht. Durch diese wird eine hohe Wärmebeständigkeit der Spanstufe, typischerweise bis zu einer Temperatur von 1100°C, erzielt.

Die Erfindung wird im Folgenden anhand der Zeichnungen erläutert. Es zeigen:
- Figur 1:: Schematische Darstellung eines Ausführungsbeispiels des erfindungsgemäßen Zerspanungswerkzeugs.
- Figur 2:: Draufsicht auf die Stirnseite des Zerspanungswerkzeugs gemäß Figur 1.
- Figur 3:: Schematische Darstellung einer Beschichtungsstruktur für das Zerspanungswerkzeug gemäß den Figuren 1 und 2.

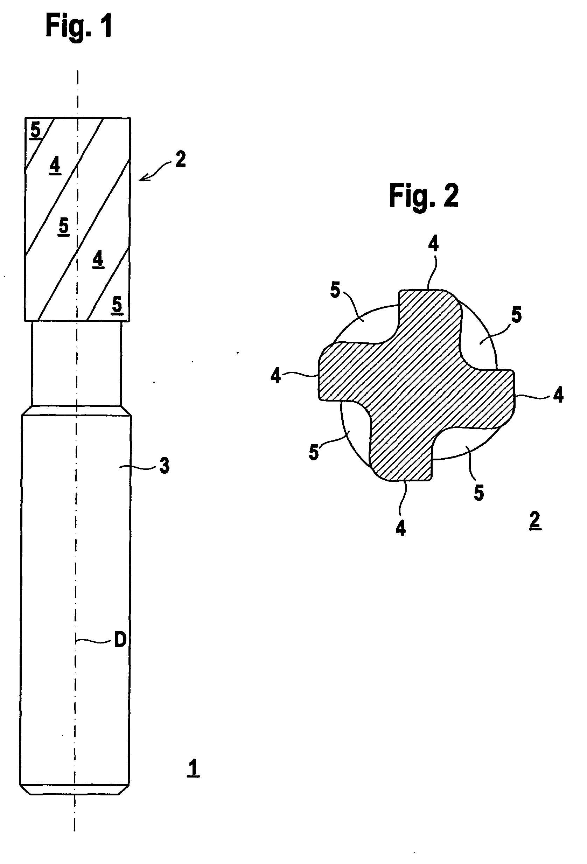

Die Figuren 1 und 2 zeigen die Geometrie eines Zerspanungswerkzeugs 1, welches generell zur Durchführung von Fräsvorgängen dient. Das Zerspanungswerkzeug 1 weißt eine Spanstufe 2 auf, an welche ein Schaft 3 anschließt, der eine im Wesentlichen kreiszylindrische Form aufweist und an seinem oberen Ende, auf welchem die Spanstufe 2 aufsitzt, einen etwas reduzierten Durchmesser aufweist.

Der Schaft 3 des Zerspanungswerkzeugs 1 kann in eine nicht dargestellte Antriebsvorrichtung eingesetzt werden. Durch die Antriebsvorrichtung kann das Zerspanungswerkzeug 1 in Drehungen um dessen Drehachse D versetzt werden, damit mit dem Zerspanungswerkzeug 1 die Fräsvorgänge durchgeführt werden können.

Die Spanstufe 2 weist mehrere wendelförmig verlaufende Schneidflächen 4, so genannte Schneiden, auf. Die Breiten der Schneidflächen 4 sind konstant. Die einzelnen Schneidflächen 4 liegen dabei auf einer Mantelfläche eines Kreiszylinders, der symmetrisch zur Drehachse D der Spanstufe ist. Die einzelnen Schneidflächen 4 sind durch Vertiefungen bildende, nutenförmige Spanräume 5 getrennt. Wie aus Figur 2 ersichtlich, münden die Spanräume 5 an den vorderen, freien Stirnseiten der Spanstufe 2 aus. Wie aus Figur 2 weiter ersichtlich, liegen an der Stirnseite der Spanstufe 2 die Kanten von vier Schneidflächen 4, wobei jeweils zwei Schneidflächen 4 durch einen Spanraum 5 getrennt sind und diese eine in der Ebene der Stirnfläche drehsymmetrische Anordnung bilden.

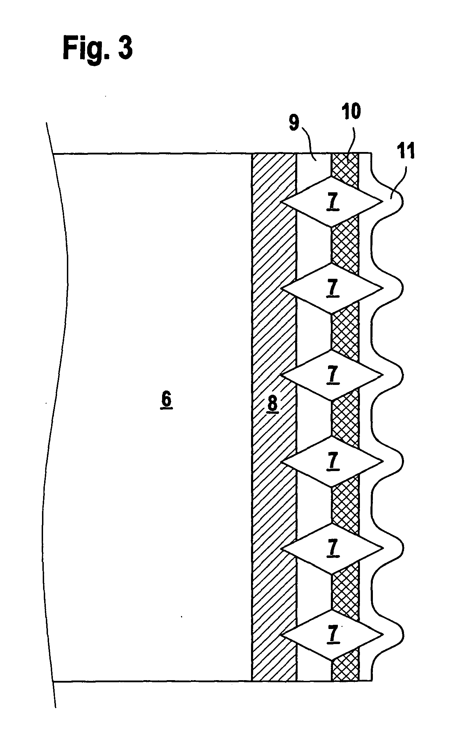

Die Schneidflächen 4 und die Oberflächen der Spanräume 5 weisen Beschichtungen auf, deren Struktur in Figur 3 dargestellt ist. Prinzipiell könnten auch nur die Schneidflächen 4 allein mit den Beschichtungen versehen sein, wobei hierzu eine geeignete Maskierung der Oberflächen der Spanräume 5 bei Aufbringen der Beschichtungen notwendig wäre.

In Figur 3 ist ein Ausschnitt des Trägers 6, das heißt des Grundkörpers der Spanstufe 2 dargestellt. Der Träger 6 besteht aus Vollhartmetall.

In einem ersten Arbeitsschritt wird die Oberfläche des Trägers 6 entfettet. Dies erfolgt mit einem Galvanikprozess, wobei durch diesen Prozess eine dünne Schicht von etwa 15 µm an der Oberfläche des Trägers 6 abgetragen wird. Zur elektrolytischen Entfettung des Trägers 6 wird ein Elektrolyt und eine Beize eingesetzt.

Auf die entfettete Oberfläche des Trägers 6 kann eine CBN-Beschichtung, das heißt eine Schichtstruktur mit CBN(cubisches Bor-Nitrid)-Partikeln aufgebracht werden.

Im vorliegenden Ausführungsbeispiel wird auf die Oberfläche des Trägers 6 eine Diamantkornbeschichtung, das hießt eine Schichtstruktur mit Diamantpartikeln 7 aufgebracht.

Die Schichtstruktur umfasst zunächst eine Vorvemickelung in Form einer Nickelchloridschicht 8.

Die Schichtdicke der Nickelchloridschicht 8 liegt typischerweise im Bereich zwischen 200 µm und 220 µm und beträgt bevorzugt etwa 210 µm. Das Aufbringen der Nickelchloridschicht 8 erfolgt bevorzugt in einem Bad.

Auf diese Nickelchloridschicht 8 werden die Diamantpartikel 7 aufgebracht. Prinzipiell können die Diamantkornpartikel durch Einpressen aufgebracht werden. Im vorliegenden Fall erfolgt das Aufbringen mittels eines Nickelsulfamat enthaltenden Bestreubads.

Die Größen der aufgebrachten Diamantpartikel 7 können applikationsspezifisch gewählt werden, wobei generell beliebige Korngrößen wählbar sind. Als besonders zweckmäßig haben sich Korngrößen von D427 40/50 US Mesh oder D601 30/35 US Mesh oder D181 80/100 US Mesh erwiesen, wobei die erste dieser Bezeichnungen die FEPA-Körnungsbezeichnung und die zweite Bezeichnung der US-Standard ASTME E 11 mesh ist.

Um ein guten Halt der Diamantpartikel 7 zu gewährleisten, wird auf die Vorverwickelung eine Einbettungsschicht 9 aufgebracht, mit der eine Einbettung der Diamantpartikel 7 erhalten wird. Das Aufbringen dieser Schicht erfolgt in einem Einwachsbad.

Prinzipiell könnte die Einbettungsschicht 9 nur aus Nickel bestehen. Im vorliegenden Fall enthält die Einbettungsschicht 9 nicht nur Nickel, sondern auch Gold um eine bessere Wärmebeständigkeit zu erhalten. Die Schichtdicke der Einbettungsschicht 9 liegt im Bereich von 100 µm bis 150 µm und beträgt vorzugsweise 125 µm.

Auf die Einbettungsschicht 9 ist eine Nickelschicht 10 aufgebracht, deren Schichtdicke im Bereich von 70 µm bis 80 µm liegt, und welche vorzugsweise 75 µm beträgt. Diese Schicht ist optional und kann insbesondere dann weggelassen werden, wenn die Einbettungsschicht 9 bereits aus Nickel besteht.

In einem letzten Arbeitsschritt wird auf die Diamantkombeschichtung eine Goldschicht 11 aufgebracht. Damit wird eine hohe Wärmebeständigkeit der Spanstufe 2 erhalten, typischerweise bis 1100°C.

Zur Bildung der Goldschicht 11 wird bevorzugt Aurobond D22 verwendet.

Die Schichtdicke der Goldschicht 11 liegt im Bereich von 120 µm bis 130 µm und beträgt vorzugsweise etwa 125 µm.

### Bezugszeichenliste

- (1): Zerspanungswerkzeug
- (2): Spanstufe
- (3): Schaft
- (4): Schneidflächen
- (5): Spanraum
- (6): Träger
- (7): Diamantpartikel
- (8): Nickelchloridschicht
- (9): Einbettungsschicht
- (10): Nickelschicht
- (11): Goldschicht

## Patentansprüche

1. Zerspanungswerkzeug (1) mit einer um eine Drehachse drehbaren Spanstufe (2) zur Durchführung von Fräsvorgängen, welche eine Mehrfachanordnung von wendelförmigen Schneidflächen (4), die durch nutenförmige Spanräume (5) getrennt sind, aufweist, wobei zumindest die Schneidflächen (4) Diamantkornbeschichtungen oder CBN-Beschichtungen aufweisen, und wobei über die Spanräume (5) während des Fräsvorgangs eine Späneentsorgung erfolgt.

2. Zerspanungswerkzeug nach Anspruch 1, **dadurch gekennzeichnet, dass** nur die Schneidflächen (4) die Diamantkornbeschichtung oder die CBN-Beschichtung aufweisen.

3. Zerspanungswerkzeug nach Anspruch 1, **dadurch gekennzeichnet, dass** die Schneidflächen (4) und die Oberflächen der Spanräume (5) die Diamantkombeschichtung oder die CBN-Beschichtung aufweisen.

4. Zerspanungswerkzeug nach einem der Ansprüche 1 bis 3, **dadurch gekennzeichnet, dass** die Diamantkombeschichtung oder die CBN-Beschichtung Nickelverbindungen aufweisen, in welche Diamantpartikel (7) eingelagert sind.

5. Zerspanungswerkzeug nach Anspruch 4, **dadurch gekennzeichnet, dass** eine Schicht aus Nickelchlorid vorgesehen ist, auf welche Diamantpartikel (7) oder CBN-Partikel aufbringbar sind.

6. Zerspanungswerkzeug nach Anspruch 5, **dadurch gekennzeichnet, dass** auf die Schicht aus Nickelchlorid die Diamantpartikel (7) oder CBN-Partikel in einem Bestreubad aufbringbar sind.

7. Zerspanungswerkzeug nach Anspruch 5, **dadurch gekennzeichnet, dass** die Diamantpartikel (7) oder die CBN-Partikel durch Einpressvorgänge aufbringbar sind.

8. Zerspanungswerkzeug nach einem der Ansprüche 5 bis 8, **dadurch gekennzeichnet, dass** die Schicht aus Nickelchlorid eine Schichtdicke im Bereich vom 200 µm bis 220 µm aufweist.

9. Zerspanungswerkzeug nach Anspruch 8, **dadurch gekennzeichnet, dass** eine Einbettungsschicht (9) zur Einbettung der Diamantpartikel (7) oder CBN-Partikel vorgesehen ist.

10. Zerspanungswerkzeug nach Anspruch 9, **dadurch gekennzeichnet, dass** die Einbettungsschicht aus Nickel besteht.

11. Zerspanungswerkzeug nach Anspruch 9, **dadurch gekennzeichnet, dass** die Einbettungsschicht (9) eine Nickel-Gold-Schicht ist, auf welche eine Nickelschicht (10) aufgebracht ist.

12. Zerspanungswerkzeug nach einem der Ansprüche 9 bis 11, **dadurch gekennzeichnet, dass** die Einbettungsschicht (9) eine Schichtdicke im Bereich von 100 µm bis 150 µm aufweist.

13. Zerspanungswerkzeug nach Anspruch 12, **dadurch gekennzeichnet, dass** die auf die Einbettungsschicht (9) aufgebrachte Nickelschicht (10) eine Schichtdicke von 70 µm bis 80 µm aufweist.

14. Zerspanungswerkzeug nach einem der Ansprüche 9 bis 13, **dadurch gekennzeichnet, dass** auf die Einbettungsschicht (9) eine Goldschicht (11) aufgebracht ist, deren Schichtdicke im Bereich von 120 µm bis 130 µm liegt.

15. Zerspanungswerkzeug nach einem der Ansprüche 1 bis 12, **dadurch gekennzeichnet, dass** die Spanstufe (2) einen Träger (6) aus Vollhartmetall aufweist, dessen Oberfläche elektrolytisch erstellt ist.
